# EUROPEAN PATENT SPECIFICATION

(11) **EP 4 328 450 B1**
(45) Date of publication and mention of the grant of the patent: **17.12.2025**
(21) Application number: 22862542.2
(22) Date of filing: 22.02.2022
(51) Int. Cl.: F04C 23/02, B23P 15/00, F01C 21/10, F04C 23/00, F04C 18/356, F04C 29/00

(54) **COMPRESSOR AND MANUFACTURING METHOD THEREFOR**
VERDICHTER UND HERSTELLUNGSVERFAHREN DAFÜR
COMPRESSEUR ET SON PROCÉDÉ DE FABRICATION

(30) Priority: 30.08.2021 CN 202111002997
(43) Date of publication of application: 28.02.2024
(73) Proprietor: Guangzhou Deshan CNC Technology Co., Ltd., Guangzhou, Guangdong 511470 (CN)
(72) Inventor: LUO, Yingxue, Guangzhou, Guangdong 511470 (CN)
(74) Representative: Hentrich Patent- & Rechtsanwaltspartnerschaft mbB
(86) International application number: PCT/CN2022/077322
(87) International publication number: WO 2023/029391

(56) References cited:
- EP-A1- 3 680 486
- WO-A1-2019/047477
- CN-A- 102 477 984
- CN-A- 102 477 985
- CN-A- 102 477 986
- CN-A- 102 477 990
- CN-A- 105 458 224
- CN-A- 108 730 185
- CN-A- 108 730 185
- CN-A- 113 803 254
- CN-U- 206 159 018
- CN-U- 208 416 938
- JP-A- S54 121 405

## Description

### TECHNICAL FIELD

The present disclosure relates to the field of heat exchange systems, and in particular, to a compressor and a manufacturing method therefor.

### BACKGROUND

The assembly steps for a traditional rotor compressor are approximately as follows: aligning and pre-assembling components comprising an upper bearing, a cylinder, a piston, a lower bearing and a crankshaft first, and then assembling an outer diameter of the upper bearing with an inner diameter of a housing, so that a stator in the housing is arranged around a rotor disposed on the crankshaft, and after a gap between the stator and the rotor is adjusted by a gap gauge, the stator and the rotor are connected by spot welding.

The aforementioned compressor production method has the following drawbacks. Due to the fact that the main housing is formed by rolling a steel plate, the shape tolerance of the main housing cannot be well guaranteed. In an operation process of the compressor, the gap between the stator and the rotor is extremely prone to being uneven, resulting in electromagnetic noises. In addition, the strength of spot welding connection between the housing and the upper bearing is insufficient, which can easily lead to accident that the upper bearing is separated from the housing.

EP3680486A1 discloses a compressor and a fabrication method therefor, wherein the compressor comprises: a housing; a motor and a cylinder, which are housed in the housing; a crankshaft, the crankshaft transmitting the rotational force of the motor to a piston in the cylinder so as to compress a refrigerant; and an upper cylinder cover and a lower cylinder cover, which define a compression space and which support the crankshaft together with the cylinder. The upper cylinder cover is located between the motor and the cylinder, and the upper cylinder cover has a through hole through which the crankshaft passes; the upper cylinder cover is provided with a first side facing the motor and a second side facing the cylinder; the inner wall of the housing is laser welded to the outer circumference of the first side and/or the outer circumference of the second side of the upper cylinder cover; and the included angle between the axial direction of a welding spot and the inner wall of the housing ranges from 0° to 45°.

CN108730185A discloses a minitype compressor with a built-in liquid reservoir. The minitype compressor with the built-in liquid reservoir comprises a compressor body; a cylinder, a main bearing, an auxiliary bearing, a crankshaft, a piston and a motor are installed in the compressor body; the upper end of the crankshaft is sleeved with the main bearing, and the lower end of the crankshaft is sleeved with the auxiliary bearing; the piston and the cylinder are fixed between the main bearing and the auxiliary bearing and sequentially installed on the eccentric portion of the crankshaft in a sleeving mode from inside to outside; the motor is connected with the crankshaft; the compressor body comprises a high-pressure end cover, a main rack, a compression cavity shell and a low-pressure end cover; a high-pressure refrigerant outlet is formed in the top of the high-pressure end cover; a low-pressure refrigerant inlet is formed in the side wall of the low-pressure end cover; the high-pressure refrigerant outlet and the low-pressure refrigerant inlet are each connected with a flared copper pipe where a quick-connection nut is preassembled; a concave portion is formed in the bottom of the compression cavity shell to serve as an oil reservoir; and a cavity formed by the low-pressure end cover and the compression cavity shell is the liquid reservoir.

CN105458224A discloses a compressor and a manufacturing method for a composite rack thereof. The manufacturing method at least comprises the following steps that a bush in the shape of a solid cylinder or ring is manufactured; casting is carried out on the peripheral face of the bush to form a bearing, the casting temperature is not lower than the melting point of the material of the bearing, and the melting point of the material of the bearing is not lower than the melting point of the material of the bush; and a composite rack blank with the bush and the bearing is formed after cooling.

CN206159018U discloses an outer rotor compressor and composite stand thereof, the outer rotor compressor includes the stator and is located the rotor in the stator outside, composite stand includes: the disc section who has the through-hole, the outer edge part upper segment, from disc section's periphery is upwards extended and is formed, the outer edge part hypomere, from disc section's periphery downwardly extending forms, the inner edge of through-hole has, from the interior week of disc section's through -hole is upwards extended and is formed, is used for supporting the stator of outer rotor compressor.

WO2019047477A1 discloses a compressor and a fabrication method therefor, the compressor comprising: a housing, having a central axis; an upper cylinder head, located in the housing and having a first inner hole of which the axis is parallel to the central axis; a lower cylinder head, located in the housing and having a second inner hole which is coaxial with the first inner hole; a motor and a cylinder, housed in the housing, the cylinder having a third inner hole of which the axis is parallel to the central axis; and a crankshaft, which transmits the rotational force of the motor to a piston in the cylinder so as to compress a refrigerant, the crankshaft being inserted into the first inner hole, the third inner hole and the second inner hole, wherein, before the crankshaft is inserted into the first inner hole, the upper cylinder head or the cylinder is integrated with the housing, or the upper cylinder head or the cylinder is interconnected to the housing.

While the above patent applications may achieve their intended purposes, there is still a need for a new and improved a compressor and a manufacturing method therefor.

### SUMMARY

The present disclosure aims to solve at least one of the technical problems in the existing technology. To this end, the present disclosure provides a compressor and a manufacturing method therefor, which can decrease electromagnetic noises during operation of the compressor, and increase the structural stability of the compressor.

The features of the compressor and the manufacturing method therefor according to embodiments of the present invention are set out in the appended set of claims.

In the production process of the compressor according to the present disclosure, the cylinder, the piston, the crankshaft, and the lower bearing may be pre-installed on the base first, then the stator is installed on the inner wall of the outer cylinder portion, and the rotor is installed on the crankshaft, and then the stator and the rotor are aligned. Because the base is an integrally formed part, a tolerance between the inner cylinder portion and the outer cylinder portion can be well controlled in the manufacturing process, and the stator is uniformly stressed after being installed on the inner wall of the outer cylinder portion with little deformation. The stator and the rotor have high coaxiality and uniform gap, which effectively reduces the electromagnetic noises caused by the uneven gap between the stator and the rotor. At the same time, the stator, the rotor, and the cylinder are all disposed on the base. Compared with the existing technology, both the stator and the rotor are supported by the base, which effectively improves the structural stability of the compressor.

Additional aspects and advantages of the present disclosure will be given in part in the following description, and will become apparent in part from the following description, or will be learned through the practice of the present disclosure.

### BRIEF DESCRIPTION OF THE DRAWINGS

The above and/or additional aspects and advantages of the present disclosure will be more apparent from the following description of the embodiments in conjunction with the accompanying drawings, wherein:
- FIG. 1: is a front view of a compressor in the embodiments of the present disclosure;
- FIG. 2: is a cross-sectional view of the compressor in the embodiments of the present disclosure;
- FIG. 3: is a sectional view of a base in FIG. 2;
- FIG. 4: is an axial view of the base in FIG. 3;
- FIG. 5: is an axial view of the base in FIG. 3 from another perspective;
- FIG. 6: is a cross-sectional view of a lower cover in FIG. 2;
- FIG. 7: is an axial view of a lower cover in FIG. 3;
- FIG. 8: is a cross-sectional view of a pipe joint in FIG. 2; and

The above drawings contain the following reference numerals.

| Reference numeral | Name | Reference numeral | Name |
|---|---|---|---|
| 100 | Base | 113 | Bottom wall |
| 101 | Connecting terminal | 114 | Waist-shaped hole |
| 102 | Exhaust pipe | 115 | Exhaust duct |
| 103 | Stator | 200 | Upper cover |
| 104 | Rotor | 300 | Lower cover |
| 105 | Crankshaft | 310 | Air inlet portion |
| 106 | Cylinder | 311 | Flared part |
| 107 | Piston | 312 | Lug boss |
| 108 | Lower bearing | 400 | Pipe joint |
| 111 | Outer cylinder portion | 401 | First flange |
| 112 | Inner cylinder portion | 402 | Second flange |

### DETAILED DESCRIPTION

The embodiments of the present disclosure will be described in detail hereinafter. Examples of the embodiments are shown in the drawings. The same or similar reference numerals throughout the drawings denote the same or similar elements or elements having the same or similar functions. The embodiments described below by reference to the drawings are exemplary and are intended only to explain the present disclosure and are not to be construed as limiting the present disclosure.

In the description of the present disclosure, it should be understood that the orientation or positional relationship indicated by the terms upper, lower, front, back, left and right is based on the orientation or positional relationship shown in the drawings, only for the convenience of describing the present disclosure and simplifying the description, and does not indicate or imply that the indicated device or element must have a specific orientation, or be constructed and operated in a specific orientation. Therefore, the terms should not be construed as limiting the present disclosure.

In the description of the present disclosure, the meaning of several refers to one or more, and the meaning of multiple refers to be two or more. The meanings of greater than, less than, more than, etc., are understood as not including the following number, while the meanings of above, below, within, etc., are understood as including the following number. If first and second are described, the descriptions are used for the purpose of distinguishing the technical features only, and cannot be understood as indicating or implying relative importance, or implicitly indicating the number of technical features indicated thereby, or implicitly indicating the order of technical features indicated thereby.

In the description of the present disclosure, unless otherwise explicitly defined, words such as setting, mounting and connecting should be understood in a broad sense, and those having ordinary skills in the art can reasonably determine the specific meanings of the above words in the present disclosure in combination with the specific contents of the technical solutions.

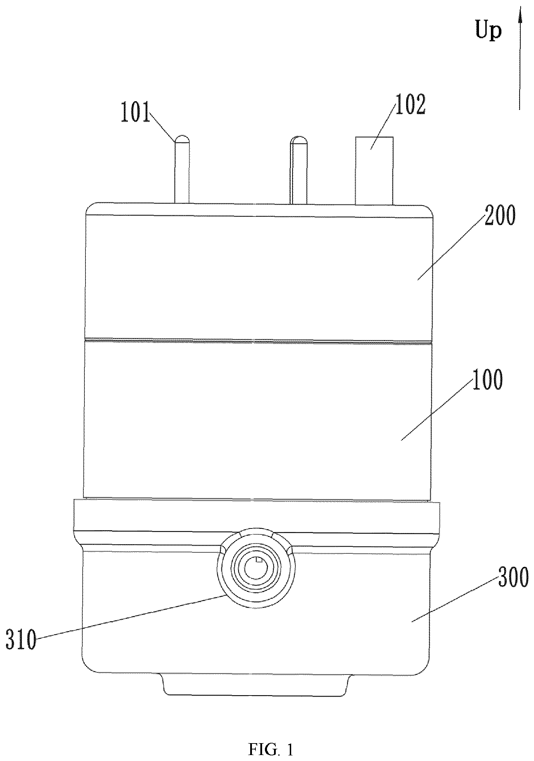

Referring to FIG. 1 to FIG. 8, a compressor according to an embodiment in a first aspect comprises: a base 100 comprising an outer cylinder portion 111 and an inner cylinder portion 112 coaxially disposed, and further comprises a bottom wall 113. The outer cylinder portion 111 and the inner cylinder portion 112 are connected by means of the bottom wall 113, an axial direction of the outer cylinder portion 111 is along a vertical direction, the outer cylinder portion 111, the inner cylinder portion 112 and the bottom wall 113 are integrally formed, and an assembly space is formed between the outer cylinder portion 111 and the inner cylinder portion 112. A crankshaft 105 extends through the inner cylinder portion 112 along an axial direction of the inner cylinder portion 112. A stator 103 is disposed on an inner wall of the outer cylinder portion 111. A rotor 104 is coaxially connected to the crankshaft 105, both the stator 103 and the rotor 104 are located in the assembly space, and the stator 103 is arranged around the rotor 104. A cylinder 106 is disposed below the bottom wall 113. A piston 107 is disposed in the cylinder 106, and the piston 107 is connected to the crankshaft 105. A lower bearing 108 is disposed below the cylinder 106, and the lower bearing 108 is connected to the crankshaft 105.

In the production process of the compressor according to the present disclosure, the cylinder 106, the piston 107, the crankshaft 105, the lower bearing 108 may be pre-installed on the base 100 first, then the stator 103 is installed on the inner wall of the outer cylinder portion 111, and the rotor 104 is installed on the crankshaft 105, and then the stator 103 and the rotor 104 are aligned. Because the base 100 is an integrally formed part, a tolerance between the inner cylinder 112 and the outer cylinder 111 can be well controlled in the manufacturing process, and the stator 103 is uniformly stressed after being installed on the inner wall of the outer cylinder portion 111 with little deformation. The stator 103 and the rotor 104 have high coaxiality and uniform gap, which effectively reduces the electromagnetic noises caused by the uneven gap between the stator 103 and the rotor 104. At the same time, the stator 103, the rotor 104, the cylinder 106 are all disposed on the base 100. Compared with the existing technology, both the stator 103 and the rotor 104 are supported by the base 100, which effectively improves the structural stability of the compressor.

The base 100 can be integrally formed in various ways, for example, the base 100 can be processed by stamping, cold extrusion, and the like, and the base 100 may also be processed by cutting a blank, such as milling and turning.

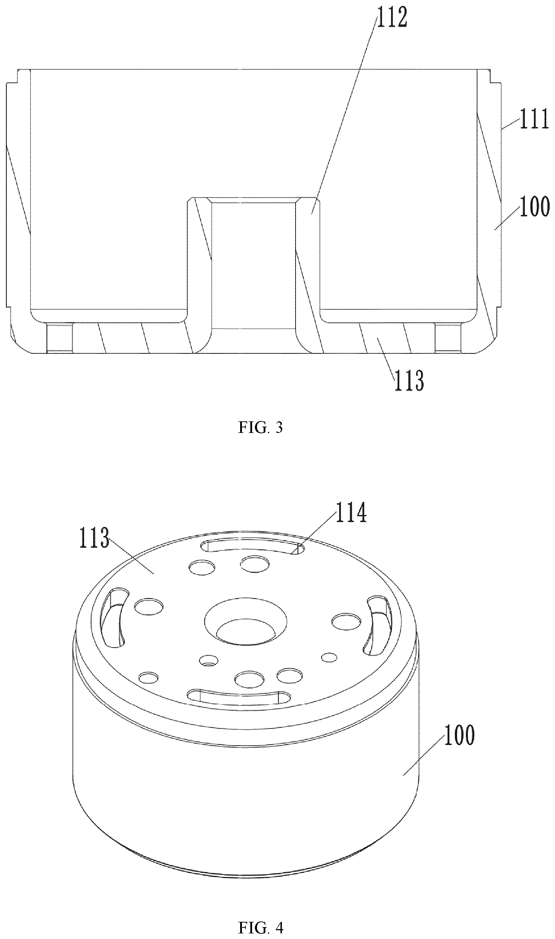

Specifically, as shown in FIG. 3, a cross-sectional shape of the base 100 is similar to a letter E, and the base comprises the inner cylinder portion 112 and the outer cylinder portion 111 which are coaxially disposed. The inner wall of the outer cylinder portion 111 is provided with a stator 103 mounting position for mounting the stator 103, and the inner cylinder has a shaft hole extending across the inner cylinder vertically for mounting the crankshaft 105. The outer cylinder portion 111 also serves as a housing, while the inner cylinder portion 112 serves the upper bearing for the compressor, that is, the base 100 may be regarded as a component after the upper bearing and a part of the housing are integrated.

On the base 100, installation methods of the stator 103, the rotor 104, the crankshaft 105, the cylinder 106, the piston 107 and the lower bearing 108 may all refer to the structure of the existing rotor 104 compressor. A plurality of bolts pass through the base 100, the cylinder 106 and the lower bearing 108 and fix these parts. In this case, the upper and lower bearings 108 jointly serve to support the crankshaft 105.

As shown in FIG. 4, the bottom wall 113 is provided with a waist-shaped hole 114, and the waist-shaped hole 114 extends through the bottom wall 113 in the vertical direction. The waist-shaped hole 114 has ventilation function and flexible buffering function, which reduces the external impact on a pump caused by thermal deformation of the housing and improves the operation reliability of the compressor. When the base 100 is manufactured by using a stamping process, slot holes such as the waist-shaped hole 114 and a bolt fixing hole formed on the bottom wall 113 can be punched out through the stamping process, thus improving the production efficiency.

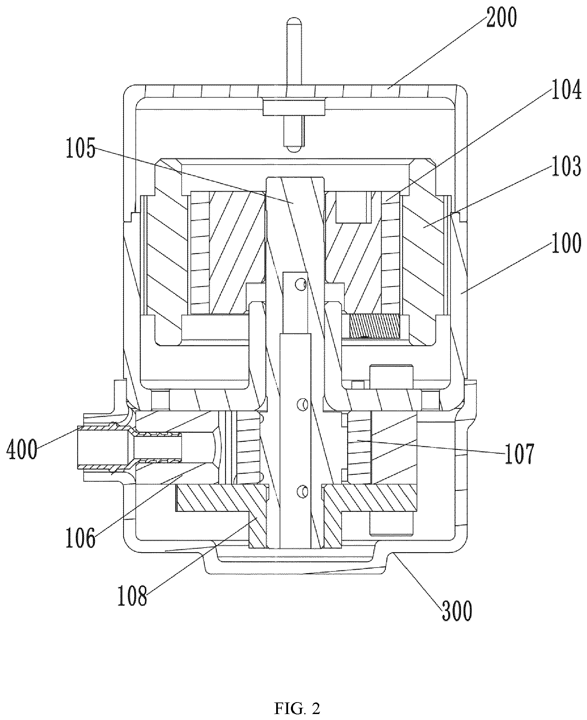

As shown in FIG. 2, the compressor further comprises an upper cover 200, and the upper cover 200 is buckled with an upper end of the outer cylinder portion 111; wherein, the outer cylinder portion 111 and the upper cover 200 together serve as a part of the whole housing of the compressor. An exhaust pipe 102 and a connecting terminal 101 are also disposed on the housing. The exhaust pipe 102 is used for discharging a refrigerant compressed by the compressor, and the connecting terminal 101 is used for supplying power to a motor and controlling an operation of the motor.

As shown in FIG. 3, an outer side of the upper end of the outer cylinder portion 111 is provided with a stopper portion, and the upper cover 200 is fitted with the stopper portion. When the upper cover 200 is covered on the outer cylinder portion 111, the stopper portion on the outer side of the upper end of the outer cylinder portion 111 can serves to limit the upper cover 200, allowing for accurate mounting between the upper cover 200 and the base 100, and a position of the upper cover 200 covered on the stopper portion can be finely adjusted before welding the two.

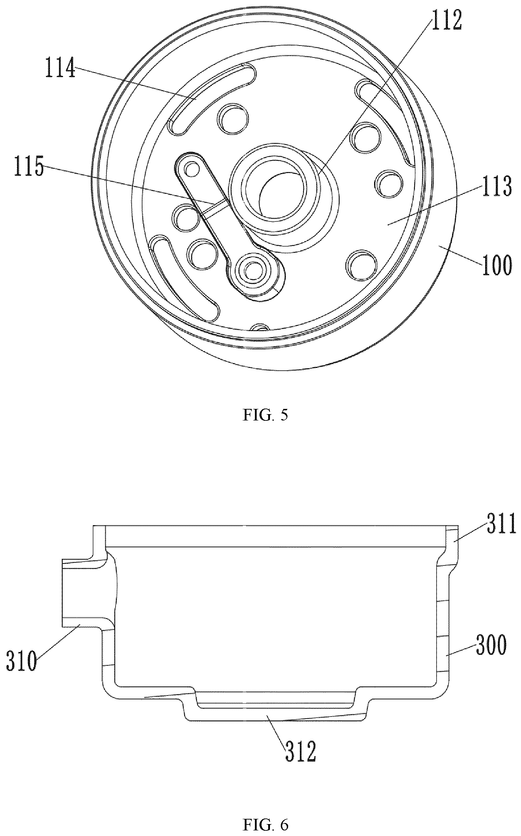

As shown in FIG. 2 and FIG. 6, the compressor further comprises a lower cover 300, and the lower cover 300 is buckled with a lower end of the outer cylinder portion 111; and a side wall of the lower cover 300 is provided with an air inlet portion 310; wherein, the upper cover 200, the outer cylinder portion 111 of the base 100 and the lower cover 300 are respectively served as three segments of the housing of the compressor, and the air inlet portion 310 is used for butting the air inlet side of the cylinder 106 with an air inlet copper pipe.

As shown in FIG. 3, an outer side of the lower end of the outer cylinder portion 111 is provided with a stopper portion, and the lower cover 300 is in clearance fit with the stopper portion. When the upper cover 200 is covered on the outer cylinder portion 111, the stopper portion on the outer side of the lower end of the outer cylinder portion 111 can serve to limit the lower cover 300, allowing for accurate mounting between the lower cover 300 and the base 100, and a position of the lower cover 300 covered on the stopper portion can be finely adjusted before completely welding the two. Specifically, due to the clearance fit between the lower cover 300 and the stopper portion, in the compressor assembly process, the lower cover 300 may be installed on the base 100 first, and then the pipe joint 400 may be installed, and then the lower cover 300 may be welded with the base 100 after the pipe joint 400 is installed in place and aligned with the air inlet side of the cylinder 106. Due to the interference fit between the pipe joint 400 and the air inlet portion 310, the above mounting method can ensure that the pipe joint 400 is aligned with the air inlet side of the cylinder 106 and prevent air leakage.

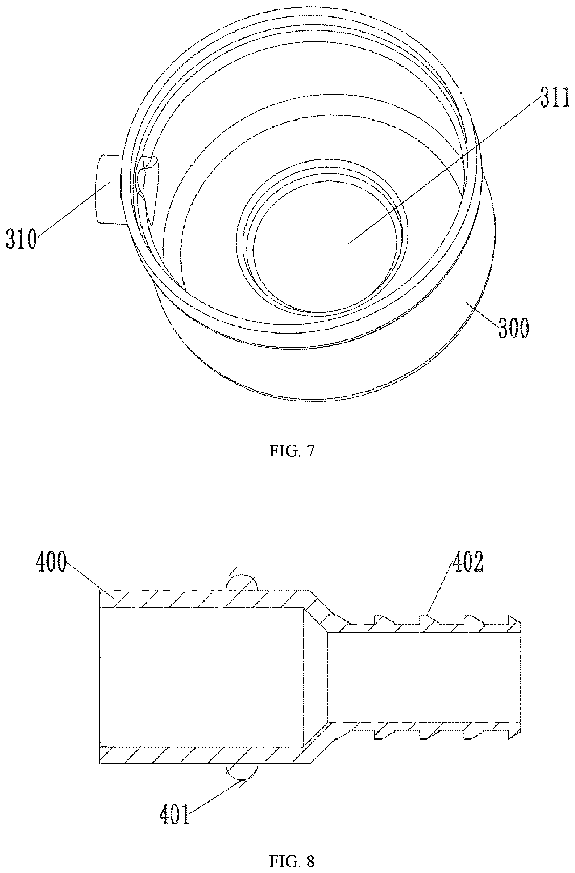

Specifically, as shown in FIG. 6 and FIG.7, a bottom portion of the lower cover 300 is further provided with a lug boss 312, which may be used for positioning and installing a compressor damping device, while a top portion of the lower cover 300 is provided with a flared portion 311, and the flared portion 311 is in clearance fit with the stopper portion at the outer side of the lower end of the outer cylinder portion 111.

In this embodiment, the upper cover 200, the lower cover 300 and the base 100 can all be manufactured by a stamping process, and the air inlet portion 310 formed on the lower cover 300 can be manufactured by a side drawing process, so that the production efficiency can be effectively improved while the accuracy of components is ensured.

As shown in FIG. 2, the compressor further comprises a pipe joint 400, and the pipe joint 400 passes through the air inlet portion 310 and communicates with an air inlet side of the cylinder 106. The pipe joint 400 is used to connect a copper pipe in a refrigerant system with the air inlet side of the cylinder 106.

Specifically, as shown in FIG. 8, a side wall of the pipe joint 400 is provided with a first flange 401 and a second flange 402, the first flange 401 is engaged with the air inlet portion 310, and the second flange 402 is engaged with the cylinder 106. The first flange 401 has a circular cross section, which is used to be engaged with the air inlet portion 310 to prevent foreign matters from entering the compressor during final welding. The second flange 402 has a stepped section and has a barb structure, which can ensure the sealing of an assembly surface after mounting and avoid high-low pressure air leakage at a suction hole of the compressor. A detailed structure of the pipe joint 400 may refer to the existing technology such as CN108644502A.

A compressor manufacturing method according to an embodiment in a second aspect for manufacturing the compressor above, comprises: a preparation step: manufacturing the base 100; a pre-assembly step: pre-assembling the cylinder 106, the piston 107, the crankshaft 105 and the lower bearing 108 on the base 100; a stator 103 mounting step: mounting the stator 103 on the inner wall of the outer cylinder portion 111; and a rotor 104 mounting step: mounting the rotor 104 on the crankshaft 105 and performing alignment, and then fastening the lower bearing 108.

Because the base 100 is an integral part and the base 100 provides support for the stator 103 and the rotor 104 at the same time, the lower bearing 108 is not fastened at first in the pre-assembly step, but after the stator 103 and the rotor 104 are aligned, the lower bearing 108 is fastened, the gap between the stator 103 and the rotor 104 is uniform and the operation is stable, which effectively reduces electromagnetic noises caused by the uneven gap between the stator 103 and the rotor 104.

Specifically, as shown in FIG. 2, a housing mounting step, a pipe joint 400 mounting step and a welding step are sequentially performed after the rotor 104 mounting step; the housing mounting step comprises: covering the upper cover 200 on the stopper portion at the upper end of the outer cylinder portion 111 and covering the lower cover 300 on the stopper portion at the lower end of the outer cylinder portion 111; the pipe joint 400 mounting step comprises: inserting the pipe joint 400 into the air inlet portion 310 of the low cover 300 and butting with the air inlet side of the cylinder 106; and the welding step comprises: welding the upper cover 200 with the base 100, and welding the lower cover 300 with the base 100. Due to the clearance fit between the flared portion 311 and the stopper portion, in the compressor assembly process, the flared portion 311 may be installed on the base 100 first, and then the pipe joint 400 may be installed, and then the lower cover 300 may be welded with the base 100 after the pipe joint 400 is installed in place and aligned with the air inlet side of the cylinder 106. Due to the interference fit between the pipe joint 400 and the air inlet portion 310, the above mounting method can ensure that the pipe joint 400 is aligned with the air inlet side of the cylinder 106 and prevent air leakage.

Specifically, in the pipe joint 400 mounting step, the first flange 401 is engaged with the air inlet portion 310, and the second flange 402 is engaged with the cylinder 106. The first flange 401 has a circular cross section, which is used to be engaged with the air inlet portion 310 to prevent foreign matters from entering the compressor during final welding. The second flange 402 has a stepped section and has a barb structure, which can ensure the sealing of an assembly surface after mounting and avoid high-low pressure air leakage at a suction hole of the compressor.

As shown in FIG. 2, in the final welding step, a three-segment body formed by connecting the upper cover 200, the base 100 and the lower cover 300 is welded by laser. In this case, the upper cover 200, the outer cylinder portion 111 and the lower cover 300 together constitute a housing portion of the whole compressor, and the whole compressor has a stable structure, a reasonable bearing structure, a uniform gap between the stator 103 and the rotor 104, and low operation noise.

As shown in FIG. 3, in the preparation step, the base 100 may be manufactured by a stamping process to improve the production efficiency. Specifically, a plate material with a brand of SPCC-2D and a thickness of 3.2 mm may be selected during stamping, and a blanking weight is 264 g; a weight of a punched product is 117 g. When meeting the strength requirements of the base 100, the punched product is lighter in weight. Meanwhile, compared with the upper bearing component made of HT250 material in the existing technology, the weight is effectively reduced while a bearing capacity requirement is met.

Specifically, in the preparation step, it is also necessary to carry out rough machining on a blank obtained by stamping, wherein the rough machining comprises the following steps in sequence: after an upper end face of the blank is leveled, lathing the stopper portion from the upper end and the low end of the outer cylinder portion 111 respectively; finely reaming a stator 103 mounting position on the inner wall of the outer cylinder portion111 by adopting a reaming process to ensure that cylindricity of the stator 103 mounting position is less than 0.02; and leveling an upper end face of the inner cylinder portion 112, and chamfering an end face of a shaft hole for mounting the crankshaft 105. In the whole rough machining step, a central shaft hole in the inner cylinder portion 112 of the stamped blank is taken as a positioning reference for mechanical rough machining.

In the preparation step, the blank after the rough machining also needs to be subjected to finishing, and the finishing sequentially comprises the following steps of: taking the finely reamed stator 103 mounting position as a positioning and clamping benchmark to carry out internal expansion self-centering; finely boring a shaft hole of the inner cylinder portion 112 and finely grinding a lower end face of the bottom wall 113; and honing the shaft hole of the inner cylinder portion 112 by a floating reaming honing process. The machining of the end face and the inner hole is completed through the same clamping, so as to ensure that verticality between the shaft hole and the end face is less than 0.002, and coaxiality between the shaft hole of the inner cylinder portion 112 and the stator 103 mounting position is less than 0.03.

In the process of manufacturing the base 100 by the stamping process, the structures such as the mounting hole, the semi-circular hole and an exhaust duct 115 formed in the bottom wall 113 can be formed by the stamping process.

The embodiments of the present disclosure are described in detail with reference to the drawings above, but the present disclosure is not limited to the above embodiments, and various changes may also be made within the knowledge scope of those of ordinary skills in the art without departing from the purpose of the present disclosure.

## Claims

1. A compressor, comprising:
a base (100) comprising an outer cylinder portion (111) and an inner cylinder portion (112) coaxially disposed, and further comprising a bottom wall (113), wherein the outer cylinder portion (111) and the inner cylinder portion (112) are connected by means of the bottom wall (113), an axial direction of the outer cylinder portion (111) is along a vertical direction, the outer cylinder portion (111), the inner cylinder portion (112) and the bottom wall (113) are integrally formed, and an assembly space is formed between the outer cylinder portion (111) and the inner cylinder portion (112);
a crankshaft (105) extending through the inner cylinder portion (112) along an axial direction of the inner cylinder portion (112);
a stator (103) disposed on an inner wall of the outer cylinder portion (111);
a rotor (104) connected to the crankshaft (105) coaxially, wherein the stator (103) is arranged around the rotor (104), and both the stator (103) and the rotor (104) are located in the assembly space;
a cylinder (106) disposed below the bottom wall (113);
a piston (107) disposed in the cylinder (106), wherein the piston (107) is connected to the crankshaft (105); and
a lower bearing (108) disposed below the cylinder (106), wherein the lower bearing (108) is connected to the crankshaft (105);
a lower cover (300), wherein the lower cover (300) is buckled with a lower end of the outer cylinder portion (111); and a side wall of the lower cover (300) is provided with an air inlet portion (310);
a pipe joint (400), wherein the pipe joint (400) passes through the air inlet portion (310) and communicates with an air inlet side of the cylinder (106);
wherein a side wall of the pipe joint (400) is provided with a first flange (401) and a second flange (402), the first flange (401) is engaged with the air inlet portion (310), and the second flange (402) is engaged with the cylinder (106), wherein the first flange (401) has a circular cross section, and the second flange (402) has a stepped section and has a barb structure.

2. The compressor according to claim 1, wherein the bottom wall (113) is provided with a waist-shaped hole (114), and the waist-shaped hole (114) extends through the bottom wall (113) in the vertical direction.

3. The compressor according to claim 1, further comprising an upper cover (200), wherein the upper cover (200) is buckled with an upper end of the outer cylinder portion (111).

4. The compressor according to claim 3, wherein an outer side of the upper end of the outer cylinder portion (111) is provided with a stopper portion, and the upper cover (200) is fitted with the stopper portion.

5. The compressor according to claim 1, wherein an outer side of the lower end of the outer cylinder portion (111) is provided with a stopper portion, and the lower cover (300) is in clearance fit with the stopper portion.

6. A compressor manufacturing method for manufacturing the compressor according to claim 1, comprising:
a preparation step: manufacturing the base (100);
a pre-assembly step: pre-assembling the cylinder (106), the piston (107), the crankshaft (105) and the lower bearing (108) on the base (100);
a stator (103) mounting step: mounting the stator (103) on an inner wall of the outer cylinder portion (111); and
a rotor (104) mounting step: mounting the rotor (104) on the crankshaft (105) and performing alignment, and then fastening the lower bearing (108);
wherein a housing mounting step, a pipe joint (400) mounting step and a welding step are sequentially performed after the rotor (104) mounting step;
the housing mounting step comprises: covering an upper cover (200) on a stopper portion at an upper end of the outer cylinder portion (111) and covering a lower cover (300) on the stopper portion at a lower end of the outer cylinder portion (111);
the pipe joint (400) mounting step comprises: inserting a pipe joint (400) into an air inlet portion (310) of the low cover (300) and butting with an air inlet side of the cylinder (106); and
the welding step comprises: welding the upper cover (200) with the base (100), and welding the lower cover (300) with the base (100);
wherein in the pipe joint (400) mounting step, a first flange (401) is engaged with the air inlet portion (310), and a second flange (402) is engaged with the cylinder (106), wherein the first flange (401) has a circular cross section, and the second flange (402) has a stepped section and has a barb structure.

7. The compressor manufacturing method according to claim 6, wherein the upper cover (200) and the lower cover (300) are manufactured by a stamping process.

8. The compressor manufacturing method according to claim 6, wherein in the welding step, a three-segment body formed by connecting the upper cover (200), the base (100) and the lower cover (300) is welded by laser.

9. The compressor manufacturing method according to claim 6, wherein in the preparation step, the base (100) is manufactured by a stamping process.

10. The compressor manufacturing method according to claim 9, wherein in the preparation step, a blank of the base (100) obtained by stamping is subjected to rough machining, and the rough machining sequentially comprises:
after an upper end face of the blank is leveled, lathing the stopper portions from the upper end and the low end of the outer cylinder portion (111) respectively;
finely reaming a stator mounting position (103) on the inner wall of the outer cylinder portion (111) by adopting a reaming process; and
leveling an upper end face of the inner cylinder portion (112), and chamfering an end face of a shaft hole for mounting the crankshaft (105).

11. The compressor manufacturing method according to claim 10, wherein in the preparation step, the blank after the rough machining is subjected to finishing, and the finishing sequentially comprises:
taking the finely reamed stator mounting position (103) as a positioning and clamping benchmark to carry out internal expansion self-centering;
finely boring a shaft hole of the inner cylinder portion (112) and finely grinding a lower end face of the bottom wall (113); and
honing the shaft hole of the inner cylinder portion (112) by a floating reaming honing process.

12. The compressor manufacturing method according to claim 9, wherein a mounting hole and a semi-circular hole opened on the bottom wall (113) are obtained by a stamping process.

## Patentansprüche

1. Kompressor, umfassend:
eine Basis (100) mit einem Außenzylinderabschnitt (111) und einem Innenzylinderabschnitt (112), die koaxial angeordnet sind, und ferner mit einer Bodenwand (113), wobei der Außenzylinderabschnitt (111) und der Innenzylinderabschnitt (112) mittels der Bodenwand (113) verbunden sind, wobei eine axiale Richtung des Außenzylinderabschnitts (111) in vertikaler Richtung verläuft, der Außenzylinderabschnitt (111), der Innenzylinderabschnitt (112) und die Bodenwand (113) einstückig ausgebildet sind und zwischen dem Außenzylinderabschnitt (111) und dem Innenzylinderabschnitt (112) ein Montageraum ausgebildet ist;
eine Kurbelwelle (105), die sich entlang einer axialen Richtung des Innenzylinderabschnitts (112) erstreckt; einem Stator (103), der an einer Innenwand des Außenzylinderabschnitts (111) angeordnet ist;
ein Rotor (104), der koaxial mit der Kurbelwelle (105) verbunden ist, wobei der Stator (103) um den Rotor (104) herum angeordnet ist und sowohl der Stator (103) als auch der Rotor (104) im Montageraum angeordnet sind;
einen Zylinder (106), der unterhalb der Bodenwand (113) angeordnet ist;
einen im Zylinder (106) angeordneten Kolben (107), wobei der Kolben (107) mit der Kurbelwelle (105) verbunden ist; und
ein unterhalb des Zylinders (106) angeordnetes unteres Lager (108), wobei das untere Lager (108) mit der Kurbelwelle (105) verbunden ist;
eine untere Abdeckung (300), wobei die untere Abdeckung (300) mit einem unteren Ende des Außenzylinderabschnitts (111) verzogen ist; und eine Seitenwand der unteren Abdeckung (300) mit einem Lufteinlassabschnitt (310) versehen ist;
einen Rohrverbinder (400), wobei der Rohrverbinder (400) durch den Lufteinlassabschnitt (310) hindurchgeht und mit einer Lufteinlassseite des Zylinders (106) in Verbindung steht;
wobei eine Seitenwand der Rohrverbindung (400) mit einem ersten Flansch (401) und einem zweiten Flansch (402) versehen ist, wobei der erste Flansch (401) mit dem Lufteinlassabschnitt (310) in Eingriff steht und der zweite Flansch (402) mit dem Zylinder (106) in Eingriff steht, wobei der erste Flansch (401) einen kreisförmigen Querschnitt aufweist und der zweite Flansch (402) einen abgestuften Abschnitt und eine Widerhakenstruktur aufweist.

2. Kompressor nach Anspruch 1, wobei die Bodenwand (113) mit einem taillierten Loch (114) versehen ist und das taillierte Loch (114) in der vertikalen Richtung durch die Bodenwand (113) verläuft.

3. Kompressor nach Anspruch 1, der ferner eine obere Abdeckung (200) umfasst, wobei die obere Abdeckung (200) mit einem oberen Ende des Außenzylinderabschnitts (111)verzogen ist.

4. Kompressor gemäß Anspruch 3, wobei eine Außenseite des oberen Endes des Außenzylinderabschnitts (111) mit einem Anschlagabschnitt versehen ist und die obere Abdeckung (200) mit dem Anschlagabschnitt verbunden ist.

5. Kompressor nach Anspruch 1, wobei eine Außenseite des unteren Endes des Außenzylinderabschnitts (111) mit einem Anschlagabschnitt versehen ist und die untere Abdeckung (300) mit dem Anschlagabschnitt in Spielpassung steht.

6. Verfahren zur Herstellung eines Kompressors gemäß Anspruch 1, umfassend:
einen Vorbereitungsschritt: Herstellen der Basis (100);
einen Vormontageschritt: Vormontage des Zylinders (106), des Kolbens (107), der Kurbelwelle (105) und des unteren Lagers (108) auf der Basis (100);
einen Stator (103)-Montageschritt: Montieren des Stators (103) an einer Innenwand des äußeren Zylinderabschnitts (111); und
einen Rotor (104)-Montageschritt: Montieren des Rotors (104) an der Kurbelwelle (105) und Ausrichten, und anschließendes Befestigen des unteren Lagers (108);
wobei ein Gehäusemontageschritt, ein Rohrverbindungsmontageschritt (400) und ein Schweißschritt nacheinander nach dem Rotormontageschritt (104) durchgeführt werden;
wobei der Gehäusemontageschritt umfasst: Abdecken eines oberen Deckels (200) auf einem Anschlagabschnitt an einem oberes Ende des äußeren Zylinderabschnitts (111) und Abdecken einer unteren Abdeckung (300) auf dem Stopperabschnitt an einem unteren Ende des äußeren Zylinderabschnitts (111);
der Rohrverbindungs-Montageschritt (400) umfasst: Einführen einer Rohrverbindung (400) in einen Lufteinlassabschnitt (310) der unteren Abdeckung (300) und Anstoßen an eine Lufteinlassseite des Zylinders (106); und
der Schweißschritt umfasst: Schweißen der oberen Abdeckung (200) mit der Basis (100) und Schweißen der unteren Abdeckung (300) mit der Basis (100);
wobei in dem Rohrverbindungs-Montageschritt (400) ein erster Flansch (401) mit dem Lufteinlassabschnitt (310) in Eingriff steht und ein zweiter Flansch (402) mit dem Zylinder (106) in Eingriff steht, wobei der erste Flansch (401) einen kreisförmigen Querschnitt aufweist und der zweite Flansch (402) einen abgestuften Abschnitt und eine Widerhakenstruktur aufweist.

7. Verfahren zur Herstellung eines Kompressors nach Anspruch 6, wobei die obere Abdeckung (200) und die untere Abdeckung (300) durch einen Stanzprozess hergestellt werden.

8. Verfahren zur Herstellung eines Kompressors nach Anspruch 6, wobei in dem Schweißschritt ein dreiteiliger Körper, der durch Verbinden der oberen Abdeckung (200), der Basis (100) und der unteren Abdeckung (300) geformt ist, durch Laser verschweißt wird.

9. Verfahren zur Herstellung eines Kompressors nach Anspruch 6, wobei in dem Vorbereitungsschritt die Basis (100) durch einen Stanzprozess hergestellt wird.

10. Verfahren zur Herstellung eines Kompressors nach Anspruch 9, wobei in dem Vorbereitungsschritt ein durch Stanzen erhaltener Rohling der Basis (100) einer Grobbearbeitung unterzogen wird und die Grobbearbeitung nacheinander umfasst:
nach dem Nivellieren einer oberen Endfläche des Rohlings das Drehen der Anschlagteile von der oberen Endfläche und dem unteren Ende des Außenzylinderabschnitts (111) ab;
Feinreiben einer Statorbefestigungsposition (103) an der Innenwand des Außenzylinderabschnitts (111) durch einen Reibvorgang; und
Nivellieren einer oberen Endfläche des Innenzylinderabschnitts (112) und Anfasen einer Endfläche eines Schaftloches zur Befestigung der Kurbelwelle (105).

11. Verfahren zur Herstellung eines Kompressors nach Anspruch 10, wobei in dem Vorbereitungsschritt der Rohling nach der Grobbearbeitung einer Endbearbeitung unterzogen wird und die Endbearbeitung nacheinander umfasst:
Nehmen der fein geriebenen Stator-Befestigungsposition (103) als Positionierungs- und Klemmreferenzpunkt, um eine selbstzentrierende innere Expansion durchzuführen;
Feinbohren eines Schaftloches des Innenzylinderabschnitts (112) und Feinschleifen einer unteren Endfläche der Bodenwand (113); und
Honen des Schaftloches des Innenzylinderabschnitts (112) durch einen schwimmenden Reibhonprozess.

12. Verfahren zur Herstellung eines Kompressors nach Anspruch 9, wobei ein Befestigungsloch und ein halbkreisförmiges Loch, die an der Bodenwand (113) geöffnet sind, durch einen Stanzvorgang erhalten werden.

## Revendications

1. Compresseur, comprenant :
une base (100) comprenant une partie cylindrique extérieure (111) et une partie cylindrique intérieure (112) disposées coaxialement, et comprenant en outre une paroi inférieure (113), dans lequel la partie cylindrique extérieure (111) et la partie cylindrique interne (112) sont reliées au moyen de la paroi inférieure (113), une direction axiale axiale de la partie cylindrique extérieure (111) est orientée verticalement, la partie cylindrique extérieure (111), la partie cylindrique intérieure (112) et la paroi inférieure (113) sont formées d'un seul tenant, et un espace d'assemblage est formé entre la partie cylindrique extérieure (111) et la partie cylindrique intérieure (112) ;
un vilebrequin (105) s'étendant à travers la partie cylindrique intérieure (112) dans une direction axiale de la partie cylindrique intérieure (112) ;
un stator (103) disposé sur une paroi interne de la partie cylindrique externe (111) ;
un rotor (104) relié au vilebrequin (105) de manière coaxiale, dans lequel le stator (103) est disposé autour du rotor (104), et le stator (103) et le rotor (104) sont tous deux situés dans l'espace d'assemblage ;
un cylindre (106) disposé sous la paroi inférieure (113) ;
un piston (107) disposé dans le cylindre (106), dans lequel le piston (107) est relié au vilebrequin (105) ; et
un palier inférieur (108) disposé sous le cylindre (106), le palier inférieur (108) étant relié au vilebrequin (105) ;
un couvercle inférieur (300), dans lequel le couvercle inférieur (300) est plié avec une extrémité inférieure de la partie extérieure partie de cylindre (111) ; et une paroi latérale du couvercle inférieur (300) est pourvue d'une partie d'entrée d'air (310) ;
un raccord de tuyau (400), dans lequel le raccord de tuyau (400) traverse la partie d'entrée d'air (310) et communique avec un côté d'entrée d'air du cylindre (106) ;
dans lequel une paroi latérale du joint de tuyau (400) est pourvue d'une première bride (401) et d'une deuxième (402), la première bride (401) étant en prise avec la partie d'entrée d'air (310) et la deuxième bride (402) est en prise avec le cylindre (106), dans lequel la première bride (401) a une section transversale circulaire, et la deuxième bride (402) a une section en gradins et une structure à barbelures.

2. Le compresseur selon la revendication 1, dans lequel la paroi inférieure (113) est pourvue d'un trou en forme de taille (114), et le trou en forme de taille (114) s'étend à travers la paroi inférieure (113) dans le direction verticale.

3. Le compresseur selon la revendication 1, comprenant en outre un couvercle supérieur (200), dans lequel le couvercle supérieur (200) est plié avec une extrémité supérieure de la partie cylindrique extérieure (111).

4. Le compresseur selon la revendication 3, dans lequel un côté extérieur de l'extrémité supérieure de la partie cylindrique extérieure (111) est pourvu d'une partie d'arrêt, et le couvercle supérieur (200) est ajusté avec la partie d'arrêt.

5. Compresseur selon la revendication 1, dans lequel un côté extérieur de l'extrémité inférieure de la partie cylindrique extérieure (111) est pourvu d'une partie d'arrêt, et le couvercle inférieur (300) est monté avec un jeu avec la partie d'arrêt.

6. Procédé de fabrication d'un compresseur selon la revendication 1, comprenant :
une étape de préparation : fabrication de la base (100) ;
une étape de pré-assemblage : pré-assembler le cylindre (106), le piston (107), le vilebrequin (105) et le palier inférieur (108) sur la base (100) ;
une étape de montage du stator (103) : montage du stator (103) sur une paroi interne de la partie extérieure du cylindre (111) ; et
une étape de montage du rotor (104) : montage du rotor (104) sur le vilebrequin (105) et alignement, puis fixation du palier inférieur (108) ;
dans lequel une étape de montage du boîtier, une étape de montage du raccord de tuyau (400) et une étape de soudage sont effectuées séquentiellement après l'étape de montage du rotor (104) ;
l'étape de montage du boîtier comprend : le recouvrement d'un couvercle supérieur (200) sur une partie d'arrêt au niveau d'un extrémité supérieure de la partie cylindrique extérieure (111) et recouvrant un couvercle inférieur (300) sur la partie d'arrêt à une extrémité inférieure de la partie cylindrique extérieure (111) ;
l'étape de montage du raccord de tuyau (400) comprend : l'insertion d'un raccord de tuyau (400) dans une partie d'entrée d'air (310) du couvercle inférieur (300) et la mise en butée avec un côté entrée d'air du cylindre (106) ; et
l'étape de soudage comprend : le soudage du couvercle supérieur (200) à la base (100), et le soudage du couvercle inférieur (300) avec la base (100) ;
dans lequel, lors de l'étape de montage du raccord de tuyau (400), une première bride (401) est engagée avec la partie d'entrée d'air (310), et une deuxième bride (402) est engagée avec le cylindre (106), dans lequel la première bride (401) a une section transversale circulaire, et la deuxième bride (402) a une section en gradins et une structure à barbelures.

7. Procédé de fabrication d'un compresseur selon la revendication 6, dans lequel le couvercle supérieur (200) et le couvercle inférieur (300) sont fabriqués par un processus d'emboutissage.

8. Procédé de fabrication d'un compresseur selon la revendication 6, dans lequel, lors de l'étape de soudage, un corps à trois segments formé en reliant le couvercle supérieur (200), la base (100) et le couvercle inférieur (300) est soudé au laser.

9. Procédé de fabrication d'un compresseur selon la revendication 6, dans lequel, lors de l'étape de préparation, la base (100) est fabriquée par un procédé d'emboutissage.

10. Procédé de fabrication d'un compresseur selon la revendication 9, dans lequel, lors de l'étape de préparation, une ébauche de la base (100) obtenue par emboutissage est soumise à un usinage grossier, et l'usinage grossier comprend séquentiellement :
après le nivellement d'une face d'extrémité supérieure de l'ébauche, le tournage des parties d'arrêt à partir de l'extrémité supérieure et l'extrémité inférieure de la partie cylindrique extérieure (111) respectivement ;
alésage fin d'une position de montage du stator (103) sur la paroi intérieure de la partie cylindrique extérieure (111) à l'aide d'un processus d'alésage ; et
niveler une face d'extrémité supérieure de la partie cylindrique intérieure (112) et chanfreiner une face d'extrémité d'un trou d'arbre pour monter le vilebrequin (105).

11. Procédé de fabrication d'un compresseur selon la revendication 10, dans lequel, dans l'étape de préparation, l'ébauche après l'usinage grossier est soumise à une finition, et la finition comprend séquentiellement :
prendre la position de montage du stator finement alésée (103) comme référence de positionnement et de serrage pour effectuer une expansion interne autocentrée ;
alésage fin d'un trou d'arbre de la partie de cylindre interne (112) et meulage fin d'une face d'extrémité inférieure de la paroi inférieure (113) ; et
honer le trou d'arbre de la partie cylindrique interne (112) par un processus d'alésage flottant.

12. Procédé de fabrication d'un compresseur selon la revendication 9, dans lequel un trou de montage et un trou semi-circulaire ouverts sur la paroi inférieure (113) sont obtenus par un processus d'estampage.
